**Europäisches Patentamt**

**European Patent Office**

**Office européen des brevets**

(11) Veröffentlichungsnummer : **0 008 400**
**B1**

(12) **EUROPÄISCHE PATENTSCHRIFT**

(45) Veröffentlichungstag der Patentschrift :
03.02.82

(51) Int. Cl.³ : **G 02 F   1/133**

(21) Anmeldenummer : **79102834.3**

(22) Anmeldetag : **06.08.79**

(54) Anzeigevorrichtung mit einer Flüssigkristallzelle und Verfahren zum Betrieb einer solchen Anzeigevorrichtung.

(30) Priorität : **11.08.78 DE 2835347**

(43) Veröffentlichungstag der Anmeldung :
**05.03.80 (Patentblatt 80/05)**

(45) Bekanntmachung des Hinweises auf die Patenterteilung : **03.02.82 Patentblatt 82/05**

(84) Benannte Vertragsstaaten :
**AT CH FR GB IT NL SE**

(56) Entgegenhaltungen :
**BE - A - 863 987**
**DE - A - 2 616 669**
**DE - A - 2 619 368**
**DE - A - 2 640 909**
**DE - A - 2 759 339**
**FR - A - 2 349 904**
**ELECTRONICS INTERNATIONAL, vol. 50, n° 25, Dezember 1977, New York, US,**
**M. BECHTER ET AL. : « Dim light is no turnoff for fluorescenceactivated LCD », Seiten 113-116**

(73) Patentinhaber : **SIEMENS AKTIENGESELLSCHAFT**
**Berlin und München**
**Postfach 22 02 61**
**D-8000 München 22 (DE)**

**Fraunhofer-Gesellschaft zur Förderung der angewandten Forschung e.V.**
**Leonrodstrasse 54**
**D-8000 München 19 (DE)**

(72) Erfinder : **Baur, Günther, Dr., Dipl.-Phys.**
**Waldhofstrasse 8d**
**D-7800 Freiburg (DE)**
Erfinder : **Krüger, Hans, Dipl.-Phys.**
**Peralohstrasse 13**
**D-8000 München 83 (DE)**
Erfinder : **Windscheid, Fritz**
**Etzmattenstrasse 24**
**D-7800 Freiburg 33 (DE)**
Erfinder : **Wittwer, Volker, Dr., Dipl.-Phys.**
**Kammertalstrasse 15**
**D-7800 Freiburg 33 (DE)**

(74) Vertreter : **Mehl, Ernst, Dipl.-Ing.**
**Postfach 22 01 76**
**D-8000 München 22 (DE)**

## Anzeigevorrichtung mit einer Flüssigkristallzelle und Verfahren zum Betrieb einer solchen Anzeigevorrichtung

Die Erfindung betrifft eine Anzeigevorrichtung gemäß dem Oberbegriff des Anspruchs 1. Ein solches « fluoreszenzaktiviertes Display » (FLAD) ist bereits aus der BE-A-863987 bekannt.

Bei dem vorbekannten FLAD-Typ ist die Nutzlichtausbeute der Fluoreszenzplatte relativ hoch, da das Anregungslicht dann, wenn es bei seinem ersten Durchgang durch die Platte noch nicht absorbiert worden ist, durch den rückwertigen Reflektor noch ein weiteres Mal in die Platte geschickt wird. Dennoch ist die Leuchtkraft des Displays noch nicht unter allen Umständen befriedigend, weil das Anregungslicht in dem vor der Fluoreszenzplatte befindlichen, gemäß der BE-A-863987 auch noch mit Polarisatoren versehenen Flüssigkristallventil geschwächt wird.

Die Fluoreszenzplatte erhält ungeschwächtes Licht, wenn man sie, wie in der DE-A-26 16 669 vorgesehen, vor die Flüssigkristallzelle setzt und über seitliche, nach hinten abgeknickte Plattenansätze einen optischen Kontakt mit der Zelle herstellt. Bei diesem Aufbau ist sichergestellt, daß das in der Fluoreszenzplatte eingefangene Licht seitlich in die Flüssigkristallzelle eingekoppelt wird und daß ein erheblicher Anteil davon an angesteuerten Flüssigkristallbereichen nach vorn zum Betrachter hin herausgestreut werden kann. Das Display der DE-A-26 16 669 hat überdies — wie jedes FLAD mit optisch integriertem Lichtventil — die Vorteile, daß die Fluoreszenzplatte keine speziellen Lichtaustrittsfenster benötigt, daß keine Polarisatoren erforderlich sind und daß das Fluoreszenzlicht nur an ausgewählten Stellen ausgekoppelt wird. Nachteilig ist allerdings, daß die Konstruktion relativ kompliziert und voluminös ist.

Das FLAD wird kompakter, wenn man die Flüssigkristallzelle mit optischem Kontakt direkt vor die Fluoreszenzplatte setzt. Diese Variante liefert jedoch im Auflichtbetrieb keine sonderlich hellen Bilder, weil auch hier wie bei der in der BE-A-863987 geschilderten Ausführung das Lichtventil einen Teil des Anregungslichts schluckt.

Der Erfindung liegt die Aufgabe zugrunde, ein FLAD, bei dem eine Flüssigkristallzelle und eine Fluoreszenzplatte optisch gekoppelt sind, so auszugestalten, daß es wenig Platz beansprucht und auch dann, wenn es in Reflexion betrieben wird, durch Ausnutzung des von der Flüssigkristallzelle rückgestreuten Lichtes lichtstarke Bilder liefert. Diese Aufgabe wird erfindungsgemäß durch ein Display mit den Merkmalen des Patentanspruchs 1 gelöst.

. Bei einer erfindungsgemäßen Anzeigevorrichtung erhält die Fluoreszenzplatte auf ganzer Fläche volles Anregungslicht. Das in der Platte erzeugte Fluoreszenzlicht gelangt auf kurzen Wegen und auch aus seitlichen Richtungen zu den aktivierten Flüssigkristallbereichen. Hauptursache dafür ist die erfindungsgemäß vorgeschriebene Maßnahme, die Seitenflächen der Fluoreszenzplatte und des Flüssigkristallventils mit optisch entkoppelten, diffus reflektierenden Schichten zu versehen, denn diese Reflektoren werfen auftreffendes Licht bevorzugt in Richtung ihrer Flächennormalen zurück (vergl. hierzu auch die DE-A-2808440). Auf diese Weise kommt ein überraschend hoher Darstellungskontrast zustande.

Wollte man das von den streuenden Bereichen der schaltbaren Ventilschicht nach vorn ausgesandte und gewöhnlich in einem relativ großen Raumwinkelbereich austretende Licht zu einer bestimmten Richtung hin bündeln, so könnte man hierzu vor die Anzeigevorrichtung eine geeignete Kollektorschicht plazieren, beispielsweise eine — ohne optischen Kontakt aufgebrachte — Folie mit Pyramiden- oder Kerbenstruktur.

Vielfach sind die Verhältnisse so, daß das Spektrum des Beleuchtungslichts Frequenzen enthält, die oberhalb des Absorptionsbandes für den Fluoreszenzstoff liegen. In diesen Fällen läßt sich die Bildhelligkeit noch weiter steigern, wenn man das vorgeschlagene Display folgendermaßen aufbaut: Das Kontrastfilter ist ein Hochpaßfilter, d.h. es läßt neben dem Anregungslicht auch höherfrequente Strahlung passieren, und der Reflektor verschiebt diese Strahlung in das Absorptionsband, ehe er sie zurückgibt. Eine solche Wellenlängentransformation kann beispielsweise durch in den Reflektor eingebaute Fluoreszenzzentren vollzogen werden.

Weitere vorteilhafte Ausgestaltungen und Weiterbildungen der Erfindung sind Gegenstand zusätzlicher Ansprüche.

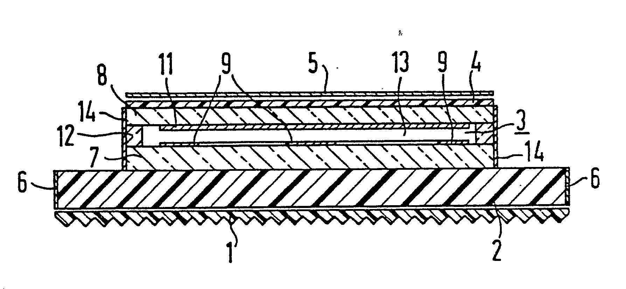

Die Erfindung soll nun anhand eines besonders bevorzugten Ausführungsbeispiels unter Bezugnahme auf die beigefügte Figur näher erläutert werden.

Die Figur zeigt in enem etwas schematisierten Seitenschnitt eine FLAD-Version mit Flüssigkristallanzeige, die beispielsweise in einer Armbanduhr Verwendung finden könnte. Einzelheiten der dargestellten Ausführung, die für ein Verständnis der Erfindung nicht unbedingt erforderlich sind, beispielsweise Halterungselemente, elektrische Zuleitungen oder eine ggf. erforderliche Zusatzbeleuchtung, sind der Einfachheit halber weggelassen.

Die dargestellte Anzeigevorrichtung enthält eine Pyramidenfolie 1, eine Fluoreszenzplatte 2, eine Flüssigkristallzelle 3, ein Kontrastfilter 4 und einen Reflektor 5. Alle diese Teile sind in Betrachtungsrichtung in der Reihenfolge ihrer Aufzählung hintereinander angeordnet.

Die Fluoreszenzplatte 2, deren Aufbau und Wirkungsweise detailliert in der DE-OS 25 54 226 beschrieben ist, trägt auf ihren vier Schmalseiten jeweils eine diffus reflektierende Schicht 6. Alle diese Schichten haben keinen optischen Kontakt mit der Fluoreszenzplatte, befinden sich also in einem endlichen Abstand zur Platte. Diese Bedingung ist bereits dann hinreichend erfüllt, wenn die Reflexionsschichten auf ihre jeweiligen Unterlagen aufgestrichen werden.

Die Flüssigkristallzelle 3, die der Fluoreszenzplatte 2 direkt anliegt, enthält im einzelnen eine vordere Trägerplatte 7, eine hintere Trägerplatte 8, die beide auf ihren einander gegenüberliegenden Innenflächen jeweils elektrisch leitfähige Beläge (segmentierte Vorderelektrode mit Elektrodensegmenten 9, durchgehende Rückelektrode 11) tragen und über einen Rahmen 12 hermetisch dicht miteinander verbunden sind. In der von den beiden Substraten und dem Rahmen gebildeten Kammer befindet sich eine Flüssigkristallschicht 13. Die vier Schmalseiten der Flüssigkristallzelle sind jeweils mit einer diffus reflektierenden Schicht 14, und zwar ebenfalls ohne optischen Kontakt, bedeckt. Diese Schichten sorgen dafür, daß auch Fluoreszenzlicht aus « toten » Zellenbereichen in Richtungen umgelenkt wird, in denen es zur Anzeige beitragen kann.

Das Kontrastfilter 4 hinter der Zelle 3 ist so beschaffen, daß es für das Anregungsspektrum der fluoreszierenden Partikel transparent ist, die übrigen Frequenzen des sichtbaren Lichtes dagegen sperrt. Der rückwärtige Reflektor 5 ist ebenfalls diffus streuend und hat — wie die Folie 1 — keinen optischen Kontakt mit dem ihm benachbarten Teil.

Für die einzelnen Displayteile können beispielsweise folgende Materialien verwendet werden : Die beiden Trägermaterialien könnten aus Glas bestehen, die Elektroden aus einem mit Antimon dotierten Zinnoxid, der Rahmen aus einem Glaslot, die Fluoreszenzplatte aus Polymethylmetacrylat mit darin gelöstem Fluoreszein, die diffus reflektierenden Schichten aus Titanoxid und das Kontrastfilter aus einer gefärbten Folie. Der Brechungsindex der Glasplatten ist derart an den der Fluoreszenzplatte angepaßt, daß das Licht an der gemeinsamen Grenzfläche praktisch keine Reflexionen erfährt.

Das dargestellte FLAD bringt die ihm eingegebene Information auf folgende Weise zur Darstellung : Licht aus der Umgebung wird von der Pyramidenfolie aufgefangen und gelangt in die Fluoreszenzplatte. Dort wird es bestimmter Frequenzanteil, das Anregungslicht, zum größten Teil von den fluoreszierenden Partikeln absorbiert. Der übrige Teil des Umgebungslichtes durchsetzt die Fluoreszenzplatte und — wenn die Flüssigkristallschicht nicht aktiviert ist — auch die Flüssigkristallzelle und trifft auf das Kontrastfilter. Dort wird die Strahlung, soweit es sich um Frequenzen außerhalb des Absorptionsbandes handelt, ausgefiltert oder aber, soweit die Strahlung zum Anregungslicht des Fluoreszenzstoffes gehört, hindurchgelassen, vom Reflektor in die Fluoreszenzplatte zurückgeworfen und dort zum großen Teil von den fluoreszierenden Partikeln absorbiert. Das in der Fluoreszenzplatte absorbierte Licht wird wieder emittiert, und zwar räumlich isotrop und nach längeren Wellenlängen hin verschoben. Der weitaus überwiegende Teil dieser Emissionsstrahlung (« Fluoreszenzlicht ») wird durch Totalreflexion an den Grenzflächen oder durch Reflexion an den diffusen Reflektoren im Inneren der Anzeigevorrichtung weitergeleitet bis es auf das Kontrastfilter trifft und dort vernichtet wird.

Befindet sich das Display im « Aus »-Zustand, so zeigt es eine dunkle Anzeigefläche. Schaltet man einen bestimmten Bereich der Flüssigkristallschicht ein, dann werden die Strahlen, die in diesem Bereich geraten, gestreut. Ein Teil dieses Streulichtes erreicht schließlich den Betrachter, der somit ein helles, in der Fluoreszenzfarbe getöntes, parallaxefreies Bild vor einem nahezu schwarzen Hintergrund wahrnimmt.

Wollte man auch den Hintergrund farbig erscheinen lassen, so müßte die Absorptionscharakteristik des Kontrastfilters entsprechend geändert werden. Dabei ist jedoch darauf zu achten, daß das Fluoreszenzspektrum stets ausgefiltert wird.

Das vom Display erzeugte Bild ist umso heller, je größer der Anteil des von der Flüssigkristallschicht nach vorne herausgestreuten Lichts ist. Ein ausreichender Kontrast stellt sich im allgemeinen schon dann ein, wenn die eingeschalteten Schichtbereiche ohne eine Vorzugsrichtung streuen. Als besonders geeignet haben sich der sog. « Heilmeier-Goldmacher » — Effekt (Proc. IEEE *57* (1969) 34) und der sog. « Bistabilitätseffekt » (Appl. Phys. Lett. *25* (1974) 5) erwiesen. Dagegen kommt die sog. « dynamische Streuung » weniger infrage, da sie eine Streucharakteristik mit einem ausgeprägten Maximum in Fortpflanzungsrichtung der einfallenden Strahlung hat und somit nur wenig Fluoreszenzlicht entlang der Plattennormalen zurückgibt.

Die Erfindung ist nicht auf das dargestellte Ausführungsbeispiel beschränkt. So Könnte man etwa die Fluoreszenzplatte zugleich auch als eine der beiden Trägerplatten verwenden oder bei einer Bauweise mit der Fluoreszenzplatte vor dem Lichtventil die hintere Trägerplatte zugleich als Kontrastfilter gestalten. Schließlich sei darauf hingewiesen, daß der Begriff « Lichtventil » im vorliegenden Zusammenhang eine weitreichende Bedeutung hat, denn er erfaßt alle diejenigen schaltbaren Flüssigkristallventile, die im Zusammenwirken mit dem Fluoreszenzkörper ein Bild einer bestimmten Farbe vor einem andersfarbigen — nicht notwendig schwarzen — Untergrund erzeugen können.

### Ansprüche

1. Anzeigevorrichtung mit einem elektrooptischen Lichtventil, das zwei jeweils mit einem elektrisch leitfähigen Belag versehene Trägerplatten und eine zwischen den beiden Trägerplatten eingeschlossene, bereichsweise zwischen einem transparenten und einem lichtstreuenden Zustand schaltbare Flüssigkristallschicht enthält, und mit einem plattenförmigen Körper (« Fluoreszenzplatte »), der aus einem Material mit einem Brechungsindex größer 1 besteht, fluoreszierende Partikel enthält und an seinen Schmalseiten jeweils mit einer Reflexionsschicht versehen ist, wobei die Anzeigevorrichtung nach hinten durch ein Kontrastfilter, das Anregungslicht für die fluoreszierenden Partikel hindurchläßt und zumindest das Emissionslicht der Fluoreszierenden Partikel sperrt, und einen hinter dem Kontrastfilter befindlichen Reflektor abgeschlossen ist, dadurch gekennzeichnet, daß die Fluoreszenzplatte (2) dem Lichtventil (3) direkt mit einem optischen Kontakt anliegt und vor dem Lichtventil (3) angeordnet ist, daß die Reflexionsschichten (6) an den Schmalseiten der Fluoreszenzplatte (2) diffus streuen und mit der Fluoreszenzplatte (2) keinen optischen Kontakt haben und daß die Schmalseiten des Lichtventils (3) jeweils mit einer diffus streuenden Reflexionsschicht (14), die mit dem Lichtventil (3) keinen optischen Kontakt hat, versehen sind.

2. Anzeigevorrichtung nach Anspruch 1, dadurch gekennzeichnet, daß der Reflektor (5) diffus zurückstreut und mit dem Kontrastfilter (4) keinen optischen Kontakt hat.

3. Anzeigevorrichtung nach Anspruch 1 oder 2, dadurch gekennzeichnet, daß die Anzeigevorrichtung nach vorne durch eine transparente Folie (1) abgeschlossen ist, die das aus lichtstreuenden Bereichen der schaltbaren Schicht (13) nach vorn gestreute Licht zur Foliennormalen hin bündelt.

4. Anzeigevorrichtung nach Anspruch 3, dadurch gekennzeichnet, daß die Folie (1) eine Pyramiden- oder Kerbenstruktur aufweist und keinen optischen Kontakt mit dem ihr benachbarten Teil hat.

5. Anzeigevorrichtung nach Anspruch 3, dadurch gekennzeichnet, daß die Folie (1) eine sog. « Lens-Folie » ist.

6. Anzeigevorrichtung nach Anspruch 1 bis 5, dadurch gekennzeichnet, daß die Fluoreszenzplatte (2) zugleich als eine der beiden Trägerplatten (7, 8) dient.

7. Anzeigevorrichtung nach einem der Ansprüche 1 bis 6, dadurch gekennzeichnet, daß dann, wenn das Beleuchtungslicht auch einen Anteil mit Frequenzen oberhalb der Anregungslichtfrequenzen enthält, das Kontrastfilter (4) auch diesen Lichtanteil hindurchläßt und der Reflektor (5) diesen Lichtanteil in Anregungslicht umwandelt, ehe er ihn reflektiert.

8. Anzeigevorrichtung nach Anspruch 7, dadurch gekennzeichnet, daß der Reflektor (5) fluoreszierende Partikel enthält.

9. Anzeigevorrichtung nach einem der Ansprüche 1 bis 8, dadurch gekennzeichnet, daß die hintere Trägerplatte (8) des Lichtventils (3) zugleich als Kontrastfilter (4) dient.

10. Verfahren zum Betrieb einer Anzeigevorrichtung nach einem der Ansprüche 1 bis 9, dadurch gekennzeichnet, daß die Flüssigkristallschicht mit dem sog. « Bistabilitätseffekt » geschaltet wird.

11. Verfahren zum Betrieb einer Anzeigevorrichtung nach einem der Ansprüche 1 bis 9, dadurch gekennzeichnet, daß die Flüssigkristallschicht mit dem sog. « Heilmeier-Goldmacher »-Effekt geschaltet wird.

## Claims

1. A display device having an electro-optical light valve comprising two carrier plates, each provided with an electrically conductive coating, and a liquid crystal layer which is enclosed between the two carrier plates and is switchable zonewise between a transparent and a light-scattering state, and having a plate-shaped body (« fluorescence plate ») which is made of a material having a refractive index greater than 1, which contains fluorescent particles and which is provided with a reflection layer on each of its narrow sides, the display device being shut off at the rear by a contrast filter which allows the excitation light for the fluorescent particles to pass and cuts off at least the light emitted by the fluorescent particles, and a reflector arranged behind the contrast filter, characterised in that the fluorescence plate (2) is in direct optical contact with the light valve (3) and is arranged in front of the light valve (3), that the reflection layers (6) on the narrow sides of the fluorescence plate (2) scatter diffusely and have no optical contact with the fluorescence plate (2), and that the narrow sides of the light valve (3) are each provided with a diffusely scattering reflection layer (14) which has no optical contact with the light valve (3).

2. A display device as claimed in Claim 1, characterised in that the reflector (5) scatters back diffusely and has no optical contact with the contrast filter (4).

3. A display device as claimed in Claim 1 or Claim 2, characterised in that the indicating device is closed off towards the front by means of a transparent foil (1) which focusses the light scattered towards the front from light-scattering zones of the switchable layer (13) in a direction normal to the foil.

4. A display device as claimed in Claim 3, characterised in that the foil (1) has a pyramidal or indented structure and is not in optical contact with the part adjoining it.

5. A display device as claimed in Claim 3, characterised in that the foil (1) is a so-called « lens foil ».

6. A display device as claimed in Claims 1 to 5, characterised in that the fluorescence plate (2) simultaneously serves as one of the two carrier plates (7, 8).

7. A display device as claimed in one of Claims 1 to 6, characterised in that when the illuminating light also includes a part having frequencies above the frequencies of the excitation light, the contrast filter (4) also transmits this part of the light and the reflector (5) converts this part of the light to excitation light before it reflects it.

8. A display device as claimed in Claim 7, characterised in that the reflector (5) contains fluorescent particles.

9. A display device as claimed in one of Claims 1 to 8, characterised in that the rear carrier plate (8) of the light valve (3) simultaneously serves as contrast filter (4).

10. A process for the operation of a display device as claimed in one of Claims 1 to 9, characterised in that the liquid crystal layer is switched by means of the so-called « bi-stability effect ».

11. A process for the operation of a display device as claimed in one of Claims 1 to 9, characterised in that the liquid crystal layer is switched by means of the so-called « Heilmeier-Goldmacher effect ».

## Revendications

1. Panneau d'affichage à dispositif électrooptique à transparence variable, du type comportant deux plaques de support dont chacune est pourvue d'un revêtement électriquement conducteur et une couche de cristal liquide enfermée entre les deux plaques de support et susceptible d'être commandée par plages entre un état transparent et un état de dispersion de la lumière, ainsi qu'un corps en forme de plaque (« plaque fluorescente ») réalisé avec un matériau à indice de réfraction supérieur à 1, contenant des particules fluorescentes et pourvu sur ses côtés étroits d'une couche réfléchissante, le dispositif d'affichage étant fermé, à l'arrière, par un filtre à contraste laissant passer de la lumière d'excitation pour les particules fluorescentes et bloquant au moins la lumière d'émission des particules fluorescentes et possédant un réflecteur derrière le filtre de contraste, caractérisé par le fait que la plaque fluorescente (2) porte directement, par contact optique, contre le dispositif à transparence variable et est disposée en avant de ce dernier, que les couches réfléchissantes (6) prévues sur les côtés étroits de la plaque fluorescente (2) dispersent de façon diffuse et n'ont pas de contact optique avec la plaque fluorescente (2), et que les côtés étroits du dispositif à transparence variable (3) sont chacun pourvus d'une couche réfléchissante (14) à dispersion diffuse et n'ayant pas de contact optique avec le dispositif à transparence variable (3).

2. Panneau d'affichage selon la revendication 1, caractérisé par le fait que le réflecteur (5) diffuse avec dispersion vers l'arrière et n'a pas de contact optique avec le filtre à contraste (4).

3. Panneau d'affichage selon la revendication 1 ou 2, caractérisé par le fait qu'il est fermé vers l'avant par une feuille transparente (1) qui focalise en direction de la normale à la feuille la lumière diffusée vers l'avant à partir de plages de la couche commutable qui diffuse la lumière vers l'avant.

4. Panneau selon la revendication 3, caractérisé par le fait que la feuille (1) a une structure à pyramides ou à encoches et ne possède aucun contact optique avec la partie qui lui est voisine.

5. Panneau d'affichage selon la revendication 3, caractérisé par le fait que la feuille (1) est une feuille dite « feuille à lentilles ».

6. Panneau d'affichage selon la revendication 1 à 5, caractérisé par le fait que la plaque fluorescente (2) fait en même temps office de l'une des deux plaques de support (7, 8).

7. Panneau d'affichage selon l'une des revendications 1 à 6, caractérisé par le fait que lorsque la lumière d'éclairage comporte une partie à des fréquences situées au-dessus des fréquences de la lumière d'excitation, le filtre à contraste (4) laisse également passer cette partie de lumière et le réflecteur (5) transforme cette partie de la lumière en lumière d'excitation au lieu de la réfléchir.

8. Panneau d'affichage selon la revendication 7, caractérisé par le fait que le réflecteur (5) contient des particules fluorescentes.

9. Panneau d'affichage selon l'une des revendications 1 à 8, caractérisé par le fait que la plaque de support postérieure (8) du dispositif à transparence variable (3) sert également de filtre à contraste (4).

10. Procédé pour la mise en œuvre d'un panneau d'affichage selon l'une des revendications 1 à 9, caractérisé par le fait que la couche à cristal liquide est commutée par l'effet dit de « bistabilité ».

11. Procédé pour la mise en œuvre d'un panneau d'affichage selon l'une des revendications 1 à 9, caractérisé par le fait que la couche à cristal liquide est commutée avec l'effet dit « Heilmeier-Goldmacher ».